# EUROPÄISCHE PATENTANMELDUNG

(11) **EP 4 492 044 A1**
(43) Veröffentlichungstag der Anmeldung: **15.01.2025**
(21) Anmeldenummer: 24184598.1
(22) Anmeldetag: 26.06.2024
(51) Int. Cl.: G01N 21/64, G01N 21/80, G01N 21/77

(54) **SENSORELEMENT FÜR OPTOCHEMISCHE SENSOREN**

(30) Priorität: 27.06.2023 DE 102023116933
(71) Anmelder: PyroScience GmbH, 52072 Aachen (DE)
(72) Erfinder: Christoph, Staudinger, 52064 Aachen (DE); Borisov, Sergey, 52064 Aachen (DE)
(74) Vertreter: Jostarndt Patentanwalts-AG

(57) **Zusammenfassung**

Die Erfindung betrifft ein Sensorelement für optochemische Sensoren umfassend eine Trägerschicht (10) und eine auf der Trägerschicht angeordnete Sensorschicht (20), dass in einer auf der Sensorschicht angeordneten weiteren Schicht (50) Titandioxid und Ruß enthält oder dispergierte Teilchen aus mindestens einem lichtabsorbierenden Material mit einem Brechungsindex > 2,5 bei 589 nm (Na-D-Linie) aufweist, und dessen Verwendung sowie einen optochemischen Sensor, der ein solches Sensorelement enthält.

## Beschreibung

Die Erfindung betrifft ein Sensorelement für optochemische Sensoren, das einen vereinfachten Aufbau und eine verbesserte Ansprechzeit aufweist.

Optochemische Sensoren sind Sensoren zur Messung mindestens eines Zustandsparameters eines Analyten, insbesondere der Konzentration oder des Partialdrucks eines Analyten in einem flüssigen oder gasförmigen Medium, unter Verwendung eines optischen Messprinzips. Dabei können optochemische Sensoren für die Anwendung verschiedener optische Messprinzipien wie beispielsweise Reflexion, Absorption und Lumineszenz (Fluoreszenz und Phosphoreszenz) eingesetzt werden. Solche optochemischen Sensoren werden auch als Optroden oder Optoden bezeichnet. Optochemische Sensoren sind aufgebaut aus mindestens einer Lichtquelle zur Emission von Licht, mindestens einem Photodetektor zur Erfassung von Licht und einem meist über einen oder mehrere Lichtleiter mit der Lichtquelle und der Photodetektor verbundenen Sensorelement, welches einen Indikator enthält, dessen optische Eigenschaften von einem Zustandsparameter des Analyten abhängen. Dabei ist das Indikator in einer Matrix immobilisiert, die in der Regel aus einem Polymer besteht, und die aus dem Indikator und der Matrix aufgebaute Sensorschicht ist in der Regel auf einer Trägerschicht angeordnet.

Bei der Trägerschicht handelt es sich um eine transparente, d.h. lichtdurchlässige Folie oder eine dünne Glasschicht, vorzugsweise um eine transparente Kunststofffolie aus einem nicht wasseraufnehmenden Kunststoff, insbesondere eine Folie aus Polyethylenterephthalat (PET), Polyethylennaphthalat (PEN), Polymethylmethacrylat (PMMA) oder Polystyrol (PS). Die Dicke der Trägerschicht beträgt vorzugsweise 10 µm - 1 mm, insbesondere 50-200 µm.

Geeignete Indikatoren sind dem Fachmann bekannt. Beispiele für geeignete Indikatoren sind Hydroxypyren-3,6,8-trisulfonsäure (nachstehend als HPTS oder Hydroxypyrentrisulfonsäure bezeichnet) und Derivate, z.B. Salze, davon, Porpyhrin-Komplexe, Benzoporpyhrin-Komplexe, Ruthenium-Komplexe, Derivate von Bordipyrromethen ("BODIPY") und von aza- Bordipyrromethen ("aza-BODIPY"), Phenolphthalein, Fluorescein, Phenolrot, Cresolrot, Pararosanilin, Magentarot, Xylenolblau, Bromcresolpurpur, Bromphenolblau, Bromthymolblau, Metacresolpurpur, Thymolblau, Bromphenolblau, Bromthymolblau, Tetrabromphenolblau, Bromchlorphenolblau, Bromcresolgrün, Chlorphenolrot, o-Cresolphthalein, Thymolphthalein, Metanilgelb, Diphenylamin, N,N-Dimethylanilin, Indigoblau, Alizarin, Alizaringelb GG, Adizaringelb R, Kongorot, Methylrot, Methylorange, Orange I, Orange II, Nilblau A, Ethylbis-(2,4-dinitrophenyl)acetat, γ-Naphthoibenzein, Methylviolett 6B, 2,5-Dinitrophenol und/oder die verschiedenen funktionalisierten Derivate der vorangehenden Stoffe. Die bevorzugten pH-Indikatoren sind Derivate von BODIPY und von aza-BODIPY Farbstoffen und Gemische davon. Die bevorzugten Sauerstoffindikatoren sind Derivate von Benzoporphyrin-Komplexen. Die verwendete Menge des Indikators ist dabei so zu wählen, dass ein von der Konzentration des Analyten abhängiges Signal geliefert wird, das ausreichende Intensität besitzt, um zur Bestimmung der Konzentration des Analyten im Medium übertragen und ausgewertet zu werden.

Das Messprinzip beruht darauf, dass das vom Indikator nach einer Bestrahlung mittels der Lichtquelle emittierte Licht im Photodetektor erfasst wird und aus den gemessenen Daten der Zustandsparameter ermittelt wird. Bei der Lichtquelle handelt es sich um eine Einrichtung, die in der Lage ist Licht abzustrahlen. Dabei kann es sich sowohl um sichtbares Licht als auch um Infrarotstrahlung oder ultraviolette Strahlung handeln. Insbesondere kann es sich bei der Lichtquelle um eine LED handeln. Beim Photodetektor handelt es sich um eine Einrichtung, die in der Lage ist, empfangene Lichtstrahlung in nicht-optische Signale, insbesondere in elektrische Signale, speziell in einen Strom oder eine Spannung umzuwandeln. Insbesondere kann es sich bei dem Photodetektor um ein Photodiode handeln

Zur Durchführung solcher Messungen ist der optochemische Sensor mit verschiedenen elektronischen Komponenten zur Anregung und Steuerung der Lichtquelle und zur Verstärkung und Messung und Auswertung der vom Photodetektor bereitgestellten Signale verbunden.

Optochemische Sensoren benötigen für eine möglichst störungsfreie Messung meist eine optische Isolierung. Diese hat mehrere Funktionen: Den Schutz vor Sonnenlicht vor allem bei Anwendungen im Freien, beispielsweise in der Umweltanalytik. Intensives Sonnenlicht würde zu einer schnelleren Alterung der Sensorschicht und zur Drift der Signale des optischen Sensors führen. Außerdem die Reduktion von Interferenzen durch die Probe. Wenn die Probe selbst luminesziert oder Licht streut kann das die Messung beeinflussen. Eine optische Isolierung verhindert dies. Schließlich Schutz vor Übersättigung des Photodetektors. Starke Lichtquellen (z.B. Sonne) können durch den Indikator auf den Photodetektor strahlen. Dadurch kann die Messung gestört werden oder sogar ausfallen.

Die optische Isolierung wird üblicherweise als lichtabsorbierende Deckschicht auf der Sensorschicht des Sensorelements ausgeführt. Üblicherweise wird in dieser Deckschicht eine Form von Ruß oder Magnetit als absorbierendes Pigment benutzt. So beschreibt beispielsweise die DE 695 33 859 T2 einen ionischen Sensor, bei dem die Sensorschicht mit einem opaken Überzugsmaterial bedeckt ist, das aus einem Matrixmaterial mit eingelagertem Ruß aufgebaut ist.

Zusätzlich weisen viele optochemische Sensoren eine Streuschicht auf. Diese Streuschicht wird zwischen der Sensorschicht und der optischen Isolierung angeordnet und erhöht das Signal des Sensors durch Streuung von Anregungslicht und emittiertem Licht. Dabei wird Licht, das die Sensorschicht verlassen würde, mit einer gewissen Wahrscheinlichkeit zurückgestreut und erhöht so das messbare Signal. Dadurch wird entweder die Auflösung verbessert oder es ist möglich dünnere Schichten vorzusehen, die teuren Indikator sparen und die durch die reduzierten Diffusionswege bessere Ansprechzeiten bieten. Als Streukörper in einer solchen Streuschicht werden zum Beispiel Titandioxid oder Zinkoxid eingesetzt. Diese Materialien haben einen hohen Brechungsindex und führen dadurch zu effizienter Streuung des Lichts. In der EP 0 481 740 A2 wird eine solche Titandioxid enthaltende Streuschicht beschrieben.

Sensorelemente für optochemische Sensoren weisen daher auf der Trägerschicht häufig neben der Sensorschicht mit der Streuschicht und der Isolierschicht zwei weitere Schichten auf. Damit sind bei der Herstellung drei aufeinander folgende Beschichtungsschritte notwendig und die resultierende Gesamtdicke der drei Schicht verlängert die Ansprechzeit der Sensorschicht.

Aufgabe der Erfindung ist es, ein Sensorelement für optochemische Sensoren bereitzustellen, das einen gegenüber dem Stand der Technik vereinfachten Aufbau bei gleichen oder verbesserten Anwendungseigenschaften aufweist.

Erfindungsgemäß wird diese Aufgabe durch ein Sensorelement mit den Merkmalen des unabhängigen Anspruches 1 gelöst. Vorteilhafte Weiterbildungen des Sensorelements ergeben sich aus den Unteransprüchen 2-9. Die Aufgabe wird ferner durch einen optochemischen Sensor nach Anspruch 10 gelöst. Vorteilhafte Ausführungsformen des optochemischen Sensors ergeben sich aus den Unteransprüchen 11-13. Weiterhin ist Gegenstand der Erfindung die Verwendung eines erfindungsgemäßen Sensorelements gemäß Anspruch 14.

Das erfindungsgemäße Sensorelement für optochemische Sensoren umfasst eine Trägerschicht und eine auf der Trägerschicht angeordnete Sensorschicht und weist entweder eine auf der Sensorschicht angeordnete weitere Schicht auf, die Titandioxid und Ruß oder dispergierte Teilchen aus mindestens einem lichtabsorbierenden Material mit einem Brechungsindex > 2,5 bei 589 nm (Na-D-Linie) enthält oder das Sensorelement enthält in der Sensorschicht dispergierte Teilchen aus mindestens einem lichtabsorbierenden Material mit einem Brechungsindex > 2,5 bei 589 nm (Na-D-Linie).

Lichtabsorbierend bedeutet hier die Fähigkeit eines Stoffes, Licht aufzunehmen und weder zu reflektieren noch durchzulassen (zu transmittieren). Die Lichtabsorption eines Stoffes wird üblicherweise als Anteil der ursprünglich eingestrahlten Strahlung in Prozent ausgedrückt, die nicht reflektiert oder transmittiert wird.

Die erfindungsgemäß geeigneten lichtabsorbierenden Materialien weisen einem Brechungsindex > 2,5 bei 589 nm (Na-D-Linie) auf und erscheinen braun oder grau. Die Mengen des mindestens einen lichtabsorbierenden Materials in der auf der Sensorschicht angeordneten weiteren Schicht müssen so gewählt werden, dass die weitere Schicht eine Reflektion von mindestens 30% und eine Absorption von mindestens 90% aufweist. Dadurch hat die weitere Schicht gleichzeitig optisch isolierende und reflektierende Wirkung.

Üblicherweise in einer Isolierschicht eingesetzte Materialien wie Ruß oder Magnetit weisen eine hohe Lichtabsorption von bis zu 100% auf, zeigen aber eine niedrige Reflektion und streuen Licht daher kaum. Die in bekannten Streuschichten eingesetzten Streukörper haben zwar eine hohe Streuwirkung, weisen aber nur eine sehr geringe Lichtabsorption auf, so dass übliche Streuschichten eine zu hohe Lichtdurchlässigkeit zeigen, um auch als Isolierschicht wirken zu können.

Vorteilhaft weisen die dispergierten Teilchen eine Teilchengröße von 100 nm bis 5 µm, vorzugsweise 500 nm bis 2 µm auf. In einer bevorzugten Ausführungsform ist das Material der dispergierten Teilchen ausgewählt aus der Gruppe Titancarbid, Silizium, Siliziumcarbid, Bor, Wolframcarbid, Vanadiumcarbid und Industriediamant, besonders bevorzugt sind Bor, Siliziumcarbid und Mischungen dieser beiden Materialien.

In einer Ausführungsform der Erfindung, bei der eine weitere Schicht auf der Sensorschicht angeordnet ist, die dispergierte Teilchen aus mindestens einem lichtabsorbierenden Material mit einem Brechungsindex > 2,5 bei 589 nm (Na-D-Linie) oder Titandioxid und Ruß in einer Matrix aus einem Polymer enthält, das für den zu messenden Analyten durchlässig und in dem Medium unlöslich ist, das den Analyten enthält, wird nachfolgend auch als zweischichtige Ausführungsform bezeichnet.

Sofern die weitere Schicht mindestens ein lichtabsorbierendes Material mit einem Brechungsindex > 2,5 bei 589 nm (Na-D-Linie) enthält, betragen die Mengen des lichtabsorbierenden Materials bezogen auf das Gewicht der Matrix aus dem Polymer vorzugsweise 10 bis 90 Gew.-%, besonders bevorzugt 20 bis 80 Gew.-%.

Sofern die weitere Schicht Titandioxid und Ruß enthält, ist das Verhältnis von Titandioxid zu Ruß so zu wählen, dass die weitere Schicht eine Reflektion von mindestens 30% und eine Absorption von mindestens 90% bei 589 nm (Na-D-Linie) aufweist. Vorzugsweise enthält die weitere Schicht bezogen auf das Gewicht der Matrix aus dem Polymer 50 bis 90 Gew.-%, besonders bevorzugt 50 bis 80 Gew.-% Titandioxid und 0,1 bis 50 Gew.-%, besonders bevorzugt 1 bis 20 Gew.-% Ruß

Für die Messung eines ionischen Analyten ist es erforderlich, dass die Matrix aus Polymer hydrophile Eigenschaften aufweist. Bevorzugt ist in diesem Fall eine Matrix aus Polyhydroxymethylmethacrylat oder einem Polyethylenglykol basierten Hydrogel. Bei nicht-ionischen Analyten können auch andere Polymere eingesetzt werden, sofern diese für den zu messenden Analyten durchlässig und in dem Medium unlöslich sind, dass den Analyten enthält. In diesem Fall sind eine Matrix aus einem Polysiloxan, einem Perfluorpolymer oder Polystyrol besonders bevorzugt. Die Dicke der weiteren Schicht beträgt vorzugsweise 0,5 µm bis 100 µm und insbesondere 1 µm bis 10 µm.

In einer weiteren Ausführungsform der Erfindung, nachfolgend auch als einschichtige Ausführungsform bezeichnet, sind die dispergierten Teilchen aus mindestens einem lichtabsorbierenden Material mit einem Brechungsindex > 2,5 bei 589 nm (Na-D-Linie) zusammen mit dem Indikator in der Matrix der Sensorschicht enthalten. Auf diese Weise ist nur eine Schicht auf der Trägerschicht des Sensorelements erforderlich. Um mit dem einschichtigen Aufbau den gleichen Effekt zu erzielen wie mit einem zweischichtigen Aufbau aus Sensorschicht und darauf angeordneter weiterer Schicht, die die dispergierten Teilchen aus mindestens einem lichtabsorbierenden Material mit einem Brechungsindex > 2,5 bei 589 nm (Na-D-Linie) enthält, muss jedoch die Schichtdicke der einzelnen Schicht, die das Indikator und die dispergierten Teilchen aus mindestens einem lichtabsorbierenden Material mit einem Brechungsindex > 2,5 bei 589 nm (Na-D-Linie) enthält, größer gewählt werden und in etwa der Summe der Schichtdicken einer Sensorschicht und einer auf der Sensorschicht angeordneter weiterer Schicht der zweischichtigen Ausführungsform entsprechen. Dementsprechend beträgt die Schichtdicke der auf das Trägermaterial aufgebrachten Schicht bei der einschichtigen Ausführungsform vorzugsweise 1 µm bis 100 µm und insbesondere 2 µm bis 20 µm.

Dabei muss die Menge an lichtabsorbierendem Material in der Sensorschicht so gewählt werden, dass eine Reflektion von mindestens 30% und eine Absorption von mindestens 90% bei 589 nm (Na-D-Linie) aufweist. Vorzugsweise enthält die Sensorschicht bezogen auf das Gewicht der Matrix aus dem Polymer 10 bis 90 Gew.-%, besonders bevorzugt 20 bis 80 Gew.-% mindestens eines lichtabsorbierenden Materials mit einem Brechungsindex > 2,5 bei 589 nm (Na-D-Linie).

Als Matrixmaterial für eine Sensorschicht, die den Indikator und die dispergierten Teilchen aus mindestens einem lichtabsorbierenden Material mit einem Brechungsindex > 2,5 bei 589 nm (Na-D-Linie) enthält, können dieselben Polymere verwendet werden, die üblicherweise für Sensorschichten eingesetzt werden. Für die Messung eines ionischen Analyten ist es erforderlich, dass die Matrix aus Polymer hydrophile Eigenschaften aufweist. Bevorzugt ist in diesem Fall eine Matrix aus Polyhydroxymethylmethacrylat oder einem Polyethylenglykol basierten Hydrogel. Bei nicht-ionischen Analyten können auch andere Polymere eingesetzt werden, sofern diese für den zu messenden Analyten durchlässig und in dem Medium unlöslich sind, dass den Analyten enthält. In diesem Fall sind eine Matrix aus einem Polysiloxan, einem Perfluorpolymer oder Polystyrol besonders bevorzugt..

Die Herstellung der erfindungsgemäßen Sensorelement erfolgt bei der zweischichtigen Ausführungsform durch Beschichten des Verbunds aus Trägerschicht und Sensorschicht mit der weiteren Schicht, die die dispergierten Teilchen aus mindestens einem lichtabsorbierenden Material mit einem Brechungsindex > 2,5 bei 589 nm (Na-D-Linie) oder Titandioxid und Ruß in einer Matrix aus einem Polymer enthält. Dies erfolgt durch Beschichten mit üblichen Beschichtungsverfahren, vorzugsweise durch Spincoaten, Dispensieren, Siebdruck oder Tauchbeschichten und insbesondere durch Aufrakeln, einer Dispersion der Teilchen aus mindestens einem lichtabsorbierenden Material mit einem Brechungsindex > 2,5 bei 589 nm (Na-D-Linie) oder Titandioxid und Ruß in einer Lösung des Matrixmaterials in einem geeigneten Lösungsmittel. Erfindungsgemäß geeignete Lösungsmittel sind alle Lösungsmittel, in denen die Polymere löslich und die Teilchen dispergierbar sind, insbesondere CHCl₃ oder Toluol oder eine Mischung aus Ethanol und Wasser. Je nach Matrixmaterial könne aber auch andere Lösungsmittel verwendet werden. Nach einem Trocknungsschritt werden aus dem entstandenen Verbund vorzugsweise durch Stanzen Sensorelemente in einer Größe herausgeschnitten, wie sie zur Herstellung von optochemischen Sensoren benötigt werden. Diese Sensorelemente werden dann bei der Herstellung des optochemischen Sensors auf der Stirnfläche eines Lichtleiters verklebt oder verklemmt oder an einem Sensorhalter oder einer Sensorkappe vorzugsweise durch Verkleben befestigt.

Zur Herstellung der einschichtigen Ausführungsform wird die Trägerschicht direkt mit einer Dispersion der Teilchen aus mindestens einem lichtabsorbierenden Material mit einem Brechungsindex > 2,5 bei 589 nm (Na-D-Linie) in einer Lösung des Matrixmaterials beschichtet, die auch den Indikator in gelöster oder dispergierter Form enthält. Erfindungsgemäß geeignete Lösungsmittel sind insbesondere CHCl₃ oder Toluol oder eine Mischung aus Ethanol und Wasser. Je nach Matrixmaterial könne aber auch andere Lösungsmittel verwendet werden. Nach einem Trocknungsschritt werden aus dem entstandenen Verbund vorzugsweise durch Stanzen Sensorelemente in einer Größe herausgeschnitten, wie sie zur Herstellung von optochemischen Sensoren benötigt werden. Diese Sensorelemente werden dann bei der Herstellung des optochemischen Sensors auf der Stirnfläche eines Lichtleiters verklebt oder verklemmt oder an einem Sensorhalter oder einer Sensorkappe vorzugsweise durch Verkleben befestigt.

Die erfindungsgemäßen Sensorelement eignen sich besonders zu Verwendung in einem optochemischen Sensor zur Absorptionsmessung oder zur Lumineszenzmessung. Besonders bevorzugt ist die Verwendung in einem optochemischen Sensor zur Lumineszenzmessung.

Gegenstand der Erfindung ist daher auch ein optochemischer Sensor, der ein erfindungsgemäßes Sensorelement aufweist, insbesondere ein optochemischer Sensor zur Sauerstoff- oder pH-Wert-Messung. Dabei handelt es sich vorzugsweise um einen optochemischen Sensor, dessen Messprinzip auf einer Absorptionsmessung oder insbesondere einer Lumineszenzmessung beruht.

Weitere Vorteile, Besonderheiten und zweckmäßige Weiterbildungen der Erfindung ergeben sich aus den Unteransprüchen und anhand der Abbildungen.

Von den Abbildungen zeigt:
- Fig. 1: Sensorelement gemäß dem Stand der Technik
- Fig. 2: Sensorelement gemäß der zweischichtigen Ausführungsform der Erfindung
- Fig. 3: Sensorelement gemäß der einschichtigen Ausführungsform der Erfindung
- Fig. 4: Schema der Messanordnung gemäß Ausführungsbeispiel

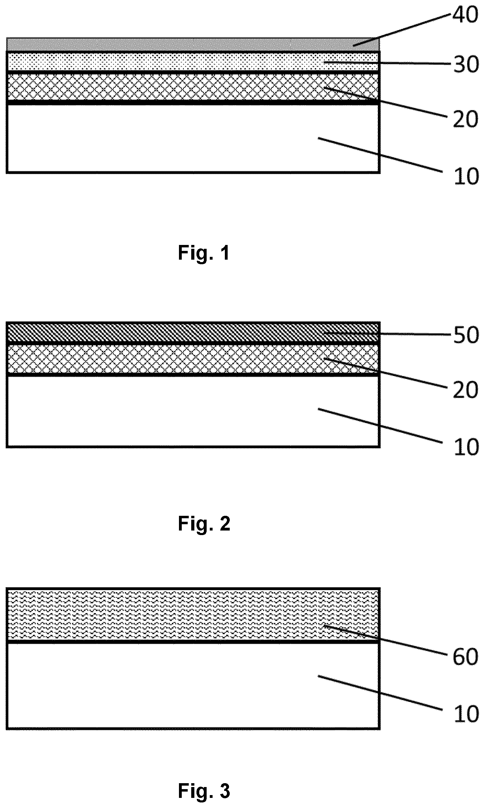

Fig. 1 zeigt den Aufbau eines Sensorelements gemäß dem Stand der Technik mit einer auf einer Trägerschicht (10) angeordneten Sensorschicht (20), auf der sich eine Streuschicht (30) befindet. Auf der Streuschicht (30) ist eine optische Isolierung (40) als Deckschicht angeordnet.

Fig. 2 zeigt den Aufbau eines erfindungsgemäßen Sensorelements in der zweischichtigen Ausführungsform. Auf der Trägerschicht (10) mit darauf angeordneter Sensorschicht (20) ist nur eine weitere Schicht mit dispergierten Teilchen aus einem lichtabsorbierenden Material mit einem Brechungsindex > 2,5 (50) angeordnet.

Fig. 3 zeigt den Aufbau eines erfindungsgemäßen Sensorelements in der einschichtigen Ausführungsform. Hier ist auf der Trägerschicht (10) als einzige Schicht eine Sensorschicht (60) angeordnet, die den Indikator und dispergierte Teilchen aus mindestens einem lichtabsorbierenden Material mit einem Brechungsindex > 2,5 enthält.

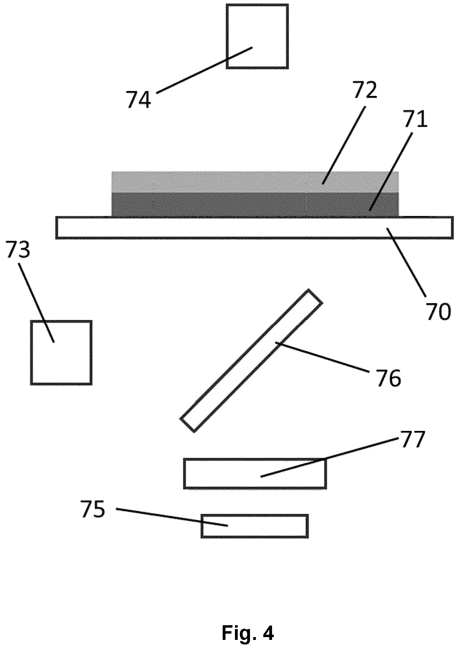

Fig 4 zeigt eine schematische Darstellung der Messanordnung, mit der die nachfolgend beschriebenen erfindungsgemäße Sensorelemente vermessen wurden.

### Vergleichsbeispiel

Auf eine 75 µm dicke PET-Folie (70) als Trägermaterial wurde eine 6 µm dicke Sensorschicht (71) aus einer Dispersion eines Sauerstoff-Indikators in Polystyrol aufgerakelt. Nach Trocknen der Sensorschicht wurde darauf eine 4 µm dicke weitere Schicht (72) aufgerakelt, die 10 Gew. % Ruß dispergiert in dem gleichen Polystyrol enthielt, wie es für die Herstellung der Sensorschicht verwendet wurde. Nach Trocknung der weiteren Schicht wurden an dem so hergestellten Sensorelement folgende Messungen vorgenommen:
(a) Das Sensormaterial wurde mit einer LED (73) von der Seite des Trägermaterials (70) über einen dichroitischen Spiegel (76) bestrahlt und auf der gleichen Seite mit einer mit einem Filter (77) versehenen Fotodiode (76) die Signalstärke des Lumineszenzsignals in mV gemessen. Der gemessen Wert betrug 24 mV (Mittelwert aus 10 Messungen).
(b) Das Sensormaterial wurde mit einer zweiten LED (74) von der Rückseite, d.h. der Seite der Titancarbid enthaltenden Schicht (72), bestrahlt und das durchtretende Licht mittels derselben Anordnung aus dichroitischem Spiegel (76), Filter (77) und Fotodiode (76) gemessen. Die gleiche Messung wurde mit einem Aufbau aus Trägerschicht (70) und Sensorschicht (71) aber ohne die Ruß enthaltende Schicht (72) durchgeführt. Durch Vergleich der beiden Messwerte wurde dann die Abschwächung des Signals durch die Ruß enthaltende Schicht (72) in % ermittelt. Diese betrug 98 % (Mittelwert aus jeweils 10 Messungen)

### Beispiel 1

Auf eine 75 µm dicke PET-Folie (70) als Trägermaterial wurde eine 6 µm dicke Sensorschicht (71) aus einer Dispersion eines Sauerstoff-Indikators in Polystyrol aufgerakelt. Nach Trocknen der Sensorschicht wurde darauf eine 4 µm dicke weitere Schicht (72) aufgerakelt, die 67 Gew. % Titancarbid dispergiert in dem gleichen Polystyrol enthielt, wie es für die Herstellung der Sensorschicht verwendet wurde.

Nach Trocknung der weiteren Schicht wurden an dem so hergestellten Sensorelement folgende Messungen vorgenommen:
(a) Das Sensormaterial wurde mit einer LED (73) von der Seite des Trägermaterials (70) über einen dichroitischen Spiegel (76) bestrahlt und auf der gleichen Seite mit einer mit einem Filter (77) versehenen Fotodiode (76) die Signalstärke des Lumineszenzsignals in mV gemessen. Der gemessen Wert betrug 58 mV (Mittelwert aus 10 Messungen) und ist damit um Faktor 2,4 höher als das Beispiel mit Ruß in der zweiten Schicht
(b) Das Sensormaterial wurde mit einer zweiten LED (74) von der Rückseite, d.h. der Seite der Titancarbid enthaltenden Schicht (72), bestrahlt und das durchtretende Licht mittels derselben Anordnung aus dichroitischem Spiegel (76), Filter (77) und Fotodiode (76) gemessen. Die gleiche Messung wurde mit einem Aufbau aus Trägerschicht (70) und Sensorschicht (71) aber ohne die Titancarbid enthaltende Schicht (72) durchgeführt. Durch Vergleich der beiden Messwerte wurde dann die Abschwächung des Signals durch die Titancarbid enthaltende Schicht (72) in % ermittelt. Diese betrug 96 % (Mittelwert aus jeweils 10 Messungen) und ist damit nur etwas geringer als das Beispiel mit der Ruß-Schicht.

### Beispiel 2

Auf eine 75 µm dicke PET-Folie (70) als Trägermaterial wurde eine 6 µm dicke Sensorschicht (71) aus einer Dispersion eines Sauerstoff-Indikators in Polystyrol aufgerakelt. Nach Trocknen der Sensorschicht wurde darauf eine 4 µm dicke weitere Schicht (72) aufgerakelt, die 50 Gew. % Titandioxid und 17 Gew.-% Ruß dispergiert in dem gleichen Polystyrol enthielt, wie es für die Herstellung der Sensorschicht verwendet wurde. Nach Trocknung der weiteren Schicht wurden an dem so hergestellten Sensorelement folgende Messungen vorgenommen:
(a) Das Sensormaterial wurde mit einer LED (73) von der Seite des Trägermaterials (70) über einen dichroitischen Spiegel (76) bestrahlt und auf der gleichen Seite mit einer mit einem Filter (77) versehenen Fotodiode (76) die Signalstärke des Fluoreszenzsignals in mV gemessen. Der gemessen Wert betrug 78 mV (Mittelwert aus 10 Messungen) und ist damit um Faktor 3,25 höher als das Beispiel mit der Ruß-Schicht.
(b) Das Sensormaterial wurde mit einer zweiten LED (74) von der Rückseite, d.h. der Seite der Titandioxid und Ruß enthaltenden Schicht (72), bestrahlt und das durchtretende Licht mittels derselben Anordnung aus dichroitischem Spiegel (76), Filter (77) und Fotodiode (76) gemessen. Die gleiche Messung wurde mit einem Aufbau aus Trägerschicht (70) und Sensorschicht (71) aber ohne die Titandioxid und Ruß enthaltende Schicht (72) durchgeführt. Durch Vergleich der beiden Messwerte wurde dann die Abschwächung des Signals durch die Titandioxid und Ruß enthaltende Schicht (72) in % ermittelt. Diese betrug 99,3 % (Mittelwert aus jeweils 10 Messungen) und ist sogar höher als bei dem Beispiel mit der Ruß-Schicht.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 10: Trägerschicht
- 20: Sensorschicht
- 30: Streuschicht
- 40: Optische Isolierung (Deckschicht)
- 50: Weitere Schicht mit dispergierten Teilchen aus mindestens einem lichtabsorbierenden Material mit einem Brechungsindex > 2,5 oder Titandioxid und Ruß
- 60: Sensorschicht mit dispergierten Teilchen aus mindestens einem lichtabsorbierenden Material mit einem Brechungsindex > 2,5
- 70: PET-Folie als Trägerschicht
- 71: Sensorschicht mit Sauerstoff-Indikator
- 72: Weitere Schicht
- 73: LED 1
- 74: LED 2
- 75: Fotodiode
- 76: Dichroitischer Spiegel
- 77: Filter

## Patentansprüche

1. Sensorelement für optochemische Sensoren umfassend eine Trägerschicht und eine auf der Trägerschicht angeordnete Sensorschicht,
**dadurch gekennzeichnet,**
**dass** das Sensorelement entweder eine auf der Sensorschicht angeordnete weitere Schicht aufweist, die Titandioxid und Ruß oder dispergierte Teilchen aus mindestens einem lichtabsorbierenden Material mit einem Brechungsindex > 2,5 bei 589 nm (Na-D-Linie) enthält oder das Sensorelement in der Sensorschicht dispergierte Teilchen aus mindestens einem lichtabsorbierenden Material mit einem Brechungsindex > 2,5 bei 589 nm (Na-D-Linie) enthält, wobei die Mengen des mindestens einen lichtabsorbierenden Materials in der auf der Sensorschicht angeordneten weiteren Schicht oder in der Sensorschicht so gewählt sind, dass die weitere Schicht beziehungsweise die Sensorschicht eine Reflektion von mindestens 30% und eine Absorption von mindestens 90% aufweist.

2. Sensorelement gemäß Anspruch 1,
**dadurch gekennzeichnet,**
**dass** die dispergierten Teilchen eine Teilchengröße von 100 nm bis 5 µm, vorzugsweise 500 nm bis 2 µm aufweisen.

3. Sensorelement gemäß einem der vorherigen Ansprüche,
**dadurch gekennzeichnet,**
**dass** das Material der dispergierten Teilchen ausgewählt ist aus der Gruppe Titancarbid, Silizium, Bor, Wolframcarbid, Vanadiumcarbid und Industriediamant.

4. Sensorelement gemäß einem der vorherigen Ansprüche,
**dadurch gekennzeichnet,**
**dass** die weitere auf der Sensorschicht angeordnete Schicht die dispergierten Teilchen aus mindestens einem lichtabsorbierenden Material mit einem Brechungsindex > 2,5 bei 589 nm (Na-D-Linie) in einer Matrix aus einem Polymer enthält, das für den zu messenden Analyten durchlässig und in dem Medium unlöslich ist, das den Analyten enthält.

5. Sensorelement gemäß Anspruch 1,
**dadurch gekennzeichnet,**
**dass** die weitere auf der Sensorschicht angeordnete Schicht Titandioxid und Ruß in einer Matrix aus einem Polymer enthält, das für den zu messenden Analyten durchlässig und in dem Medium unlöslich ist, das den Analyten enthält.

6. Sensorelement gemäß Anspruch 4 oder 5,
**dadurch gekennzeichnet,**
**dass** für die Messung eines ionischen Analyten die Matrix aus Polymer hydrophile Eigenschaften aufweist und vorzugsweise eine Matrix aus Polyhydroxymethylmethacrylat, Polyacrylamid oder einem Polyethylenglykol basierten Hydrogel ist.

7. Sensorelement gemäß Anspruch 4 oder 5,
**dadurch gekennzeichnet,**
**dass** die Matrix aus Polymer eine Matrix aus einem Polysiloxan, einem Perfluorpolymer oder Polystyrol ist.

8. Sensorelement gemäß einem der Ansprüche 6 bis 7
**dadurch gekennzeichnet,**
**dass** die weitere Schicht bezogen auf das Gewicht der Matrix aus dem Polymer 50 bis 90 Gew.-%, besonders bevorzugt 50 bis 80 Gew.-% Titandioxid und 0,1 bis 50 Gew.-%, besonders bevorzugt 1 bis 20 Gew.-% Ruß enthält.

9. Sensorelement gemäß Anspruch 1,
**dadurch gekennzeichnet,**
**dass** die Sensorschicht dispergierte Teilchen aus mindestens einem lichtabsorbierenden Material mit einem Brechungsindex > 2,5 bei 589 nm (Na-D-Linie) in einer Matrix aus einem Polymer enthält, das für den zu messenden Analyten durchlässig und in dem Medium unlöslich ist, das den Analyten enthält.

10. Optochemischer Sensor,
**dadurch gekennzeichnet,**
**dass** der optochemische Sensor ein Sensorelement gemäß einem der Ansprüche 1 bis 9 enthält.

11. Optochemischer Sensor gemäß Anspruch 10
**dadurch gekennzeichnet,**
**dass** das Messprinzip des optochemischen Sensors auf einer Absorptionsmessung oder einer Lumineszenzmessung beruht.

12. Optochemischer Sensor gemäß Anspruch 11
**dadurch gekennzeichnet,**
**dass** es sich um einen optochemischen Sensor zur pH-Wert-Messung handelt.

13. Optochemischer Sensor gemäß Anspruch 12
**dadurch gekennzeichnet,**
**dass** es sich um einen optochemischen Sensor zur Messung der SauerstoffKonzentration handelt.

14. Verwendung eines Sensorelements gemäß einem der Ansprüche 1 bis 9 in einem optochemischen Sensor zur Lumineszenzmessung, insbesondere zur Fluoreszenzmessung.
